(19) **Europäisches Patentamt / European Patent Office / Office européen des brevets**

(11) **EP 4 395 150 A1**

(12) # EUROPEAN PATENT APPLICATION

(43) Date of publication:
03.07.2024 Bulletin 2024/27

(21) Application number: 23200984.5

(22) Date of filing: 29.09.2023

(51) International Patent Classification (IPC):
$H02M\ 3/156^{(2006.01)}$    $H02M\ 3/158^{(2006.01)}$
$H02M\ 1/00^{(2006.01)}$    $H02M\ 1/32^{(2007.01)}$

(52) Cooperative Patent Classification (CPC):
H02M 3/156; H02M 1/0045; H02M 1/32;
H02M 3/1584

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2022 US 202218089036

(71) Applicant: INTEL Corporation
Santa Clara, CA 95054 (US)

(72) Inventors:
• LYAKHOV, Alexander
Portland, 97229 (US)
• HUANG, Jimmy Huat Since
11600 Penang (MY)
• SCHAEF, Christopher
San Diego, 92127 (US)
• MUNOZ CONSTANTINE, Juan
Hillsboro, 97124 (US)

(74) Representative: HGF
HGF Limited
1 City Walk
Leeds LS11 9DX (GB)

(54) **CURRENT SOURCE ASSISTED INTEGRATED POWER MANAGEMENT SYSTEM**

(57) A parallel current source may be used to improve the maximum current that can be provided by a voltage regulator. The parallel current source may be used to boost efficiency of the voltage regulator by providing additional current to the output voltage node during increased current loads. In operation, when the parallel current source detects that an output current sensed at a current sense node transgresses a current threshold level, then the parallel current source controls a variable current source to apply additional current to the output voltage node. The parallel current source enables generation of a demanded current load while reducing average current passing through individual solder bumps and other components, thereby improving component reliability. The parallel current source also the voltage regulator circuit to operate at reduced current levels that improve or maximize the power efficiency.

FIG. 1

EP 4 395 150 A1

**Description**

TECHNICAL FIELD

Embodiments described herein generally relate to power management for electronic devices.

BACKGROUND

In modern semiconductor devices, semiconductor dies (e.g., functional semiconductor circuits) may be connected using a controlled collapse chip connection (C4) mounting technique (e.g., flip chip mounting). In a C4 process, solder bumps are applied to a top side of a die, then the die is flipped and the solder bumps are aligned to contact pads on another die or to a printed circuit board (PCB), and finally the solder is reflowed to provide a conductive solder connection.

In C4 semiconductor devices, reliability limits imposed by C4 bumps or package inductors may reduce a maximum amount of current that can be delivered by a voltage regulator, such as a buck converter or fully integrated voltage regulator (FIVR). At increased current loads, the efficiency of a voltage regulator (e.g., minimization of voltage losses) are reduced as a quadratic function of the current (e.g., voltage = $current^2$ * resistance). What is needed is an improved voltage regulator for C4 semiconductor devices.

BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:

FIG. 1 is a block diagram illustrating an example voltage regulator loop architecture, according to an embodiment.
FIGs. 2A-2B are current level graphs illustrating an example voltage regulator operation, according to an embodiment.
FIGs. 3A-3B are graphs and circuit diagrams illustrating parallel current source operation, according to an embodiment.
FIG. 4 is a block diagram illustrating an example voltage regulator load domain, according to an embodiment.
FIG. 5 is a flowchart illustrating a method for parallel current source voltage regulation, according to an embodiment.
FIG. 6 is a block diagram of a computing device employing parallel current source voltage regulation, according to an embodiment.

DETAILED DESCRIPTION

A parallel current source may be used to improve the maximum current that can be provided by a voltage regulator. The parallel current source (e.g., supplemental current source) may be used to boost efficiency of the voltage regulator by providing supplemental current to the output voltage node during increased current loads. As used herein, the "parallel" nature of the parallel current source refers to an alternate current source path to provide a supplemental current to the output voltage node, where the current source path may or may not be geometrically parallel with an output current path of the voltage regulator. In operation, the parallel current source continually monitors an output current sensed at a current sense node, and when the parallel current source determines that the output current provided by the voltage regulator exceeds (e.g., transgresses) a current threshold level, then the parallel current source controls a variable current source to apply a supplemental current to the output voltage node. A feedback loop in the voltage regulator reduces the voltage and current output by the voltage regulator, such that the total current provided by the combination of the voltage regulator and the parallel current source provides a demanded current load. The parallel current source enables generation of a demanded current load while reducing average current passing through individual solder bumps and other components, thereby improving component reliability. The parallel current source also enables the voltage regulator circuit to operate at reduced current levels that improve or maximize the power efficiency. The voltage regulator may include a linear voltage regulator, a switched capacitor voltage inverter, or other voltage inverter. In an example, a switched capacitor voltage inverter may be used to generate a negative voltage supply from a positive input voltage supply. The use of a switched capacitor voltage inverter may provide improved efficiency over a linear voltage regulator by increasing efficiency and improving heat dissipation, particularly when input voltage is more than twice desired output voltage (e.g., regulation of 12V to 5V).

In the following description, for purposes of explanation, numerous specific details are set forth to provide a thorough understanding of some example embodiments. It will be evident, however, to one skilled in the art that the present disclosure may be practiced without these specific details.

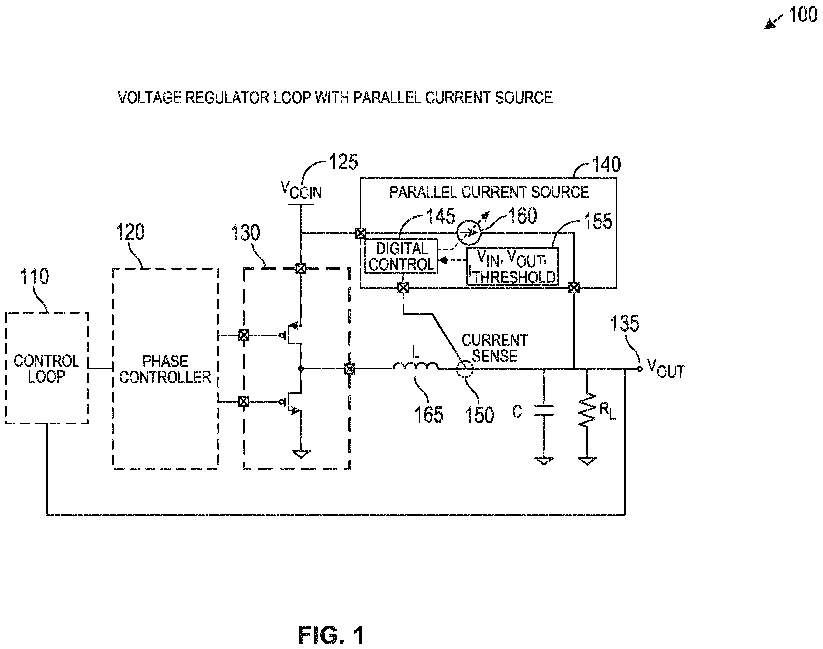

FIG. 1 is a block diagram illustrating an example voltage regulator loop architecture 100, according to an embodiment. Voltage regulator loop architecture 100 includes a control loop 110, a phase controller 120, and an inverter 130. In operation, the control loop 110 continually monitors the voltage output at an output voltage node 135, compares the monitored voltage against a target voltage, and generates an output control signal (e.g., duty cycle) to the phase controller 120. The inverter 130 may include a complementary metal-oxide-semiconductor (CMOS) inverter, and the phase controller 120 uses the control signal to provide transistor control signals to CMOS transistors within the inverter 130. The inverter 130 in turn provides an output voltage through inductor 165 to the output voltage node 135 based on phase controller inputs received from the phase controller 120.

To improve the maximum current that can be provided by a voltage regulator, the voltage regulator loop architecture 100 includes a parallel current source 140. The parallel current source 140 may be used to boost efficiency of the voltage regulator loop architecture 100 by providing additional current to the output voltage node 135 during increased current loads. The parallel current source 140 may include a digital control circuit 145, which may receive an output current level ($I_{out}$) from a current sense node 150. The digital control circuit 145 may also receive input values 155, such as an input voltage level ($V_{in}$), output voltage level ($V_{out}$), and current threshold level ($I_{THRESHOLD}$). In operation, when the parallel current source 140 detects that $I_{out}$ sensed at the current sense node 150 exceeds the $I_{threshold}$ (e.g., $I_{out}$ > Ithreshold), then the parallel current source 140 controls a variable current source 160 to apply additional current to the output voltage node 135. The feedback loop provided by the control loop 110, phase controller 120, and inverter 130 reduces the current provided from inverter 130 to an efficient current level (e.g., below the $I_{threshold}$) and maintains the current at the efficient current level. The efficient current level provided by the inverter 130 is supplemented with the current provided by parallel current source 140, and the total current provided by the combination of inverter 130 and parallel current source 140 provides a substantially constant current at a demanded current load level.

The value of $I_{threshold}$ may be determined or modified based on various parameters, such as a function of $V_{in}$, $V_{out}$, a detected temperature, and other parameters. In an example, the value of $I_{threshold}$ may trigger the parallel current source 140 when $I_{out}$ > $I_{threshold}$, as given in Eq. (1):

$$I_{out} > \frac{V_{in} - V_{out}}{2R_{Buck}} \qquad (1)$$

Where $I_{threshold} = \frac{V_{in} - V_{out}}{2R_{Buck}}$ and $R_{Buck}$ is the resistive loss associated with voltage regulator inverter and inductor, such as inverter 130 and inductor 165 shown in FIG. 1.

The determination of Eq. (1) may be based on improving or maximizing the power efficiency of the voltage regulator. Improving or maximizing the power efficiency may be viewed as reducing or minimizing the power loss ($P_{Loss}$) relative to the current source current ($I_{CS}$) (e.g., current delivered by the voltage regulator), such as shown in Eq. (2):

$$\frac{\delta P_{Loss}}{\delta I_{CS}} = 0 \qquad (2)$$

where

$$P_{Loss} = P_{Loss,Buck} + P_{Loss,CS} \qquad (3)$$

Eq. (2) may be rewritten as shown in Eq. (4):

$$\frac{\delta P_{Loss}}{\delta I_{CS}} = \frac{\delta((I_{out} - I_{CS})^2 R_{Buck} + (V_{in} - V_{out})I_{CS}))}{\delta I_{CS}} = 0 \qquad (4)$$

Taking the derivative Eq. (5) as follows:

$$\frac{\delta P_{Loss}}{\delta I_{CS}} = -2(I_{out} - I_{CS})R_{Buck} + (V_{in} - V_{out}) = 0 \qquad (5)$$

Solving Eq. (5) for $I_{CS}$ yields:

$$I_{CS} = I_{out} - \frac{V_{in} - V_{out}}{2R_{Buck}} \qquad (6)$$

As indicated in Eq. (6), any output current $I_{out}$ exceeding $\frac{V_{in} - V_{out}}{2R_{Buck}}$ should be delivered through the parallel current source 140. By delivering this additional current through the parallel current source 140, the voltage regulator loop architecture 100 may reduce or minimize power loss and improve or maximize power efficiency.

The parallel current source 140 may be used to provide a direct, on-die path from an input voltage 125 to the output voltage node 135 using low-resistance metal connections. Within voltage regulator loop architecture 100, the parallel current source 140 may be positioned along an outer edge of the load domain to provide a reduced resistance connection to the output voltage node 135 and to any further load power grid connected to the output voltage node 135.

Voltage regulator loop architecture 100 provides various advantages. By providing additional current from the parallel current source 140 during periods of increased current demand, the voltage regulator loop architecture 100 may use simpler or smaller converter components (e.g., on-die powertrain devices, inductors, solder bumps), such as converter components that are sized for a maximum current below the actual maximum current consumed by the load. Voltage regulator loop architecture 100 provides improved power efficiency in increased current load scenarios and provides an improved (e.g., increased) maximum current capability for a given architecture, such as a given die area, inductor size, and solder bump count. Voltage regulator loop architecture 100 provides advantages over solutions that require increased silicon and package area by increasing wafer or packing process to withstand increased current. Voltage regulator loop architecture 100 also provides improvements over solutions that reduce efficiency at higher loads by scaling up conductive traces and other conductive components to reduce the resistive component of the conductive traces.

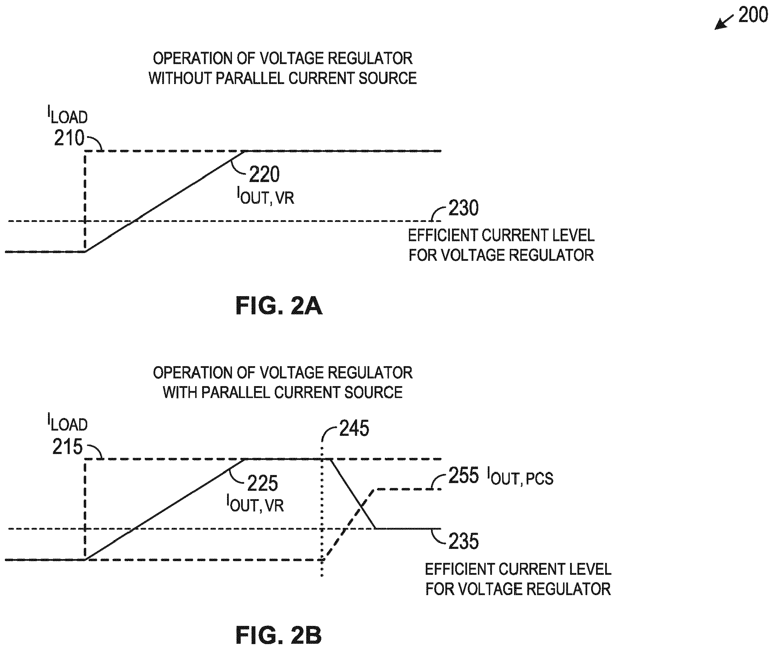

FIGs. 2A-2B are current level graphs illustrating an example voltage regulator operation 200, according to an embodiment. FIG. 2A shows the operation of a voltage converter without a parallel current source. In response to detecting an increase in the current load demand 210, the voltage regulator current may increase a voltage regulator output current 220 to the level of the current load demand 210. During periods of increased current demand, the current load demand 210 may exceed an efficient current level 230. The efficient current level 230 may correspond to a current level at which it is more efficient to supply any additional current above this level from a parallel current source. The efficient current level 230 may be determined based on various values associated with the voltage regulator, such as $V_{in}$, $V_{out}$, and $R_{Buck}$.

FIG. 2B shows the operation of a voltage converter with a parallel current source, such as the parallel current source 140 shown in FIG. 1. In response to detecting an increase in the current load demand 215, the voltage regulator current may increase a voltage regulator output current 225 to the level of the current load demand 215. The voltage regulator output current 225 may be monitored and compared to a current threshold value, and a parallel current source may be triggered when the voltage regulator output current 225 transgresses a $I_{threshold}$ value at threshold crossing time 245. In an example, the value of $I_{threshold}$ is determined as shown in Eq. (1) above based on $V_{in}$, $V_{out}$, and $R_{Buck}$. In another example, the value of $I_{threshold}$ is determined based on one or more parameters that reduce or limit the regulated current, such as one or more of a reliability limit, an inductor saturation level, a voltage circuit temperature, or other factors that limit the regulated current.

In response to the voltage regulator output current 225 increasing beyond $I_{threshold}$, the voltage regulator output current 225 may be decreased to the efficient current level 235, and a parallel current source current 255 may be increased to compensate for the decreased voltage regulator output current 225. The sum of the parallel current source current 255 and the voltage regulator output current 225 may provide a constant current level corresponding to the current load demand 215, while allowing the voltage regulator output current 225 to return to a level corresponding to a level of current flow that improves or maximizes the efficiency of the voltage regulator. The total output current provided by the combination of the efficient current level 235 and the parallel current source current 255 may be equal to or substantially equal to the current load demand 215, such as a current level within 1% or within 10% of the current load demand 215.

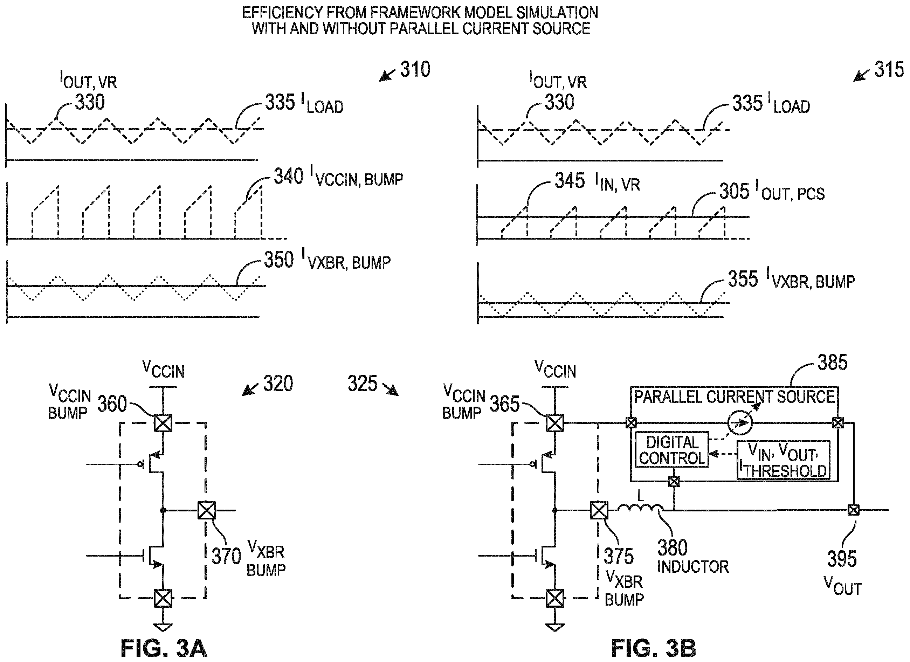

FIGs. 3A-3B are graphs and circuit diagrams illustrating parallel current source operation, according to an embodiment. FIG. 3A shows a first set of current graphs 310 corresponding to a first voltage regulator circuit 320. FIG.

3B shows a second set of current graphs 315 corresponding to a second voltage regulator circuit 325, where the second voltage regulator circuit 325 includes a parallel current source 385. As discussed herein, the second voltage regulator circuit 325 enables generation of a demanded current level at an output node 395 while reducing the average current that is passed through the voltage regulator and voltage regulator bridge output switch solder bumps ($V_{XBR}$ bump), including reducing the average current passed through second bridge output switch node 375 and inductor 380.

The first set of current graphs 310 show a voltage regulator current output 330 and an average load current 335 generated by the first voltage regulator circuit 320. For the first voltage regulator circuit 320 to generate the average load current 335 demanded by the load, a first sawtooth current 340 passes through a first input voltage node 360, which powers a first average bridge output switch node current 350 at first bridge output switch node 370.

The second set of current graphs 315 show the same voltage regulator current output 330 and an average load current 335 generated by the second voltage regulator circuit 325. To provide a portion of the average load current 335 demanded by the load, a second sawtooth current 345 passes through a second input voltage node 365. The second sawtooth current 345 is lower than first sawtooth current 340, which results in a lower current passing through the second input voltage node 365. The second sawtooth current 345 powers a second bridge output switch node current 355 at a second bridge output switch node 370. For the second voltage regulator circuit 325 to generate the average load current 335 demanded by the load, the second bridge output switch node current 355 is supplemented by a parallel current output 305 generated by the parallel current source 385. The second bridge output switch node current 355 is combined with the parallel current output 305 at the output node 395 to provide the average load current 335 demanded by the load. The parallel current source 385 within the second voltage regulator circuit 325 enables generation of a demanded current load while reducing average current passing through individual solder bumps and other components, thereby improving component reliability. The parallel current source 385 also enables the second voltage regulator circuit 325 to operate using current levels that improve or maximize the power efficiency.

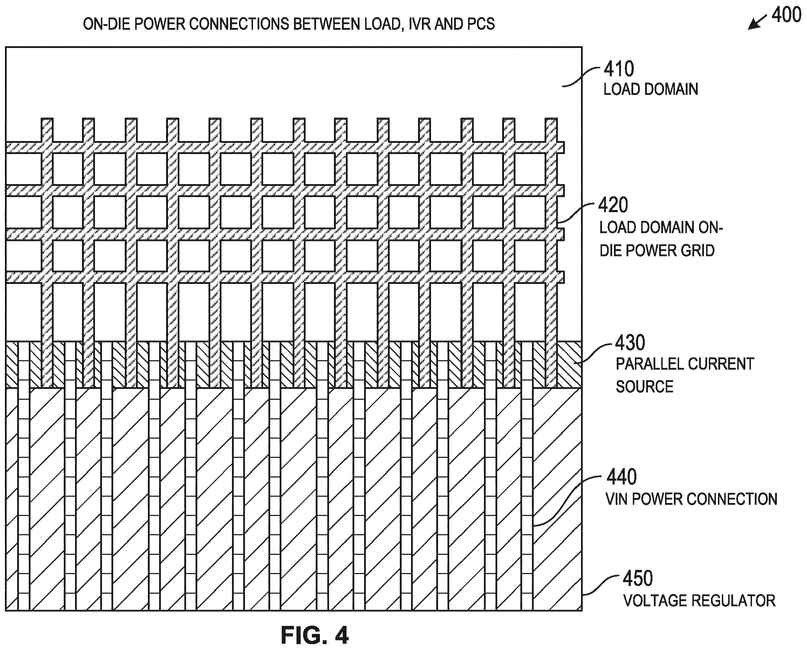

FIG. 4 is a block diagram illustrating an example voltage regulator load domain 400, according to an embodiment. The voltage regulator load domain 400 shows on-die power connections between a load domain 410, a parallel current source 430, and a voltage regulator 450. A load domain on-die power grid 420 may extend from within the load domain 410 to within the parallel current source 430, which may couple power (e.g., convey current) between the load domain 410 and the parallel current source 430. Similarly, an input voltage power connection 440 may extend from within the parallel current source 430 to within the voltage regulator 450. The load domain on-die power grid 420 may overlap the input voltage power connection 440, which may be used to convey power from the voltage regulator 450 to the load domain 410.

The use of a parallel current source 430 may enable reduced on-die area (e.g., silicon surface area). Without the parallel current source 430, the voltage regulator 450 would require additional on-die area. In an example, if the parallel current source 430 were removed, then the area required by the voltage regulator 450 may need to be doubled to provide the current demanded by a current load. By using a parallel current source 430, the on-die area may be reduced, while additionally providing improved power efficiency and improved component reliability.

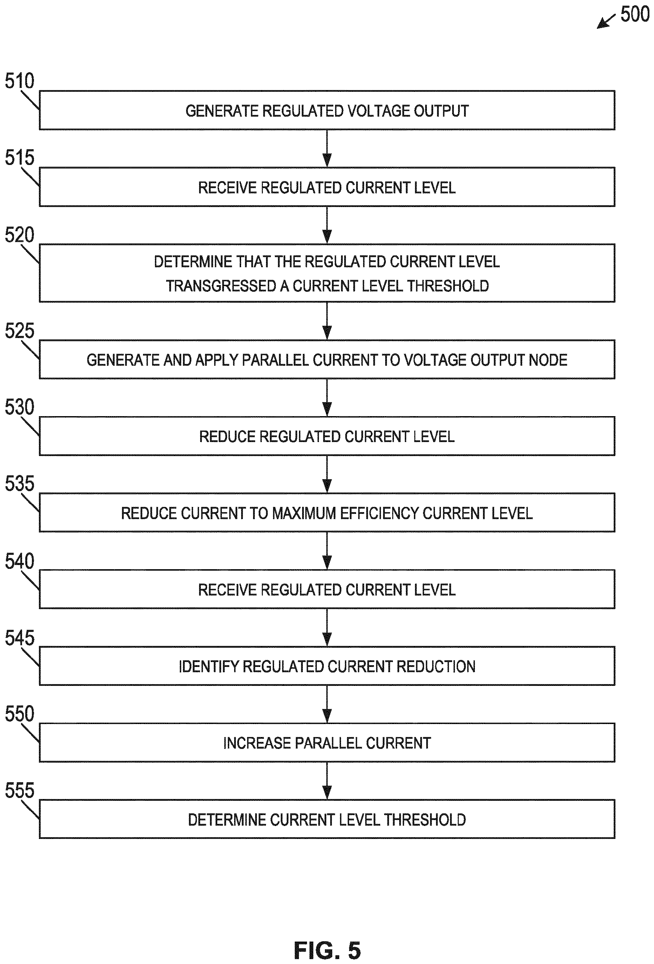

FIG. 5 is a flowchart illustrating a method for parallel current source voltage regulation 500, according to an embodiment. At block 510, method 500 includes generating a regulated voltage output at a voltage output node coupled to a voltage regulator circuit. The regulated voltage output may be associated with a regulated current level. At block 515, method 500 includes receiving the regulated current level at a parallel current source circuit. The parallel current source circuit may include a variable current source coupled to the voltage output node and a current control circuit.

At block 520, method 500 includes determining, at the current control circuit, that the regulated current level transgressed a current level threshold. At block 525, method 500 includes generating a parallel current at the variable current source and applying the parallel current to the voltage output node.

At block 530, method 500 may further include reducing the regulated current level in response to the parallel current at the voltage output node. At block 535, method 500 may further include reducing the current to be substantially equal to a voltage regulator maximum efficiency current level.

At block 540, method 500 may further include receiving the regulated current level from a current sensing circuit at a digital control circuit within the current control circuit. At block 545, method 500 may further include identifying a regulated current reduction in the regulated current level. At block 550, method 500 may further include increasing the parallel current at the voltage output node based on the reduction in the regulated current reduction such that a summed current of the parallel current and the regulated current level remains substantially constant.

At block 555, method 500 may further include determining, at the digital control circuit, the current level threshold. In an example, the current level threshold may be determined based on a regulated voltage output, input voltage level, and voltage regulator resistance received at the digital control circuit. In another example, the current level threshold may be determined based on a voltage difference based on a difference between the input voltage level and the regulated voltage output divided by a doubled regulator resistance. The voltage difference may be based on a difference between the input voltage level and the regulated voltage output, and the doubled regulator resistance may be determined based on the voltage regulator resistance.

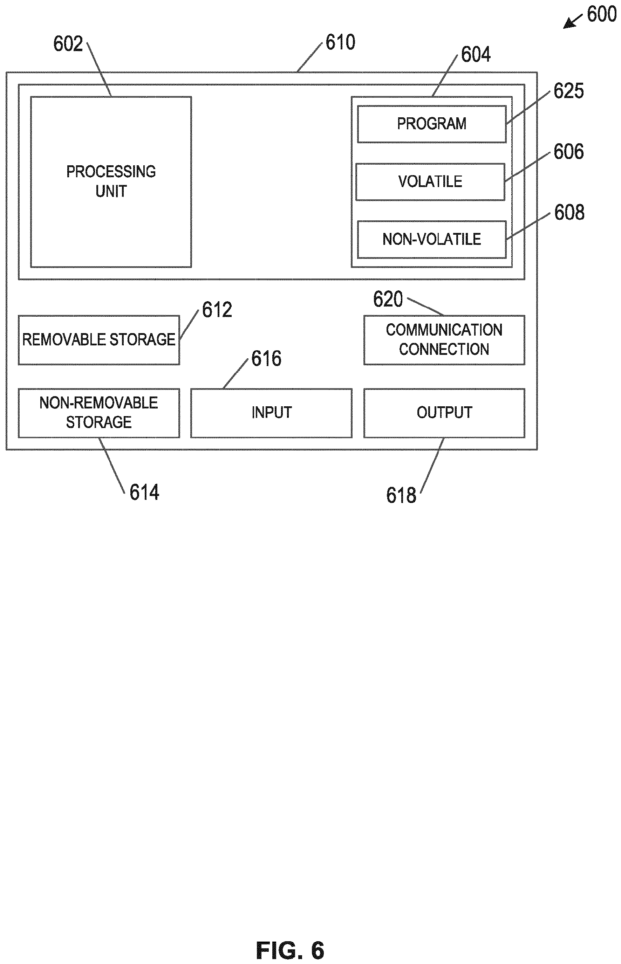

FIG. 6 is a block diagram of a computing device 600 employing parallel current source voltage regulation, according to an embodiment. The performance of one or more components within computing device 600 may be improved by including one or more of the circuits or circuitry methods described herein. Computing device 600 may include a voltage regulator circuit to generate a regulated voltage output at a voltage output node, the regulated voltage output associated with a regulated current level, and a parallel current source circuit. The parallel current source circuit may include a variable current source coupled to the voltage output node and a current control circuit. The current control circuit may be used to receive the regulated current level, determine the regulated current level transgressed a current level threshold, and cause the variable current source to generate a parallel current at the voltage output node.

In one embodiment, multiple such computer systems are used in a distributed network to implement multiple components in a transaction-based environment. An object-oriented, service-oriented, or other architecture may be used to implement such functions and communicate between the multiple systems and components. In some embodiments, the computing device of FIG. 6 is an example of a client device that may invoke methods described herein over a network. In some embodiments, the computing device of FIG. 6 is an example of one or more of the personal computer, smartphone, tablet, or various servers.

One example computing device in the form of a computer 610, may include a processing unit 602, memory 604, removable storage 612, and non-removable storage 614. Although the example computing device is illustrated and described as computer 610, the computing device may be in different forms in different embodiments. For example, the computing device may instead be a smartphone, a tablet, or other computing device including the same or similar elements as illustrated and described with regard to FIG. 6. Further, although the various data storage elements are illustrated as part of the computer 610, the storage may include cloud-based storage accessible via a network, such as the Internet.

Returning to the computer 610, memory 604 may include volatile memory 606 and non-volatile memory 608. Computer 610 may include or have access to a computing environment that includes a variety of computer-readable media, such as volatile memory 606 and non-volatile memory 608, removable storage 612 and non-removable storage 614. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 610 may include or have access to a computing environment that includes input 616, output 618, and a communication connection 620. The input 616 may include one or more of a touchscreen, touchpad, mouse, keyboard, camera, and other input devices. The input 616 may include a navigation sensor input, such as a GNSS receiver, a SOP receiver, an inertial sensor (e.g., accelerometers, gyroscopes), a local ranging sensor (e.g., LIDAR), an optical sensor (e.g., cameras), or other sensors. The computer may operate in a networked environment using a communication connection 620 to connect to one or more remote computers, such as database servers, web servers, and another computing device. An example remote computer may include a personal computer (PC), server, router, network PC, a peer device or other common network node, or the like. The communication connection 620 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 602 of the computer 610. A hard drive (magnetic disk or solid state), CD-ROM, and RAM are some examples of articles including a non-transitory computer-readable medium. For example, various computer programs 625 or apps, such as one or more applications and modules implementing one or more of the methods illustrated and described herein or an app or application that executes on a mobile device or is accessible via a web browser, may be stored on a non-transitory computer-readable medium.

Embodiments may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

A processor subsystem may be used to execute the instruction on the machine-readable medium. The processor subsystem may include one or more processors, each with one or more cores. Additionally, the processor subsystem may be disposed on one or more physical devices. The processor subsystem may include one or more specialized processors, such as a graphics processing unit (GPU), a digital signal processor (DSP), a field programmable gate array (FPGA), or a fixed function processor.

Examples, as described herein, may include, or may operate on, logic or a number of components, modules, or mechanisms. Modules may be hardware, software, or firmware communicatively coupled to one or more processors in order to carry out the operations described herein. Modules may be hardware modules, and as such modules may be considered tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software; the general-purpose hardware processor may be configured as respective different modules at different times. Software may accordingly configure a hardware processor, for example, to constitute a particular module at one instance of time and to constitute a different module at a different instance of time. Modules may also be software or firmware modules, which operate to perform the methodologies described herein.

Each of the following non-limiting examples may stand on its own, or may be combined in various permutations or combinations with one or more of the other examples.

Example 1 is a system comprising: a voltage regulator circuit to generate a regulated voltage output at a voltage output node, the regulated voltage output associated with a regulated current level; and a supplemental current source circuit including: a variable current source coupled to the voltage output node; and a current control circuit to: receive the regulated current level; determine the regulated current level transgressed a current level threshold; and cause the variable current source to generate a supplemental current at the voltage output node.

In Example 2, the subject matter of Example 1 includes further subject matter where wherein the supplemental current source circuit includes a parallel current source circuit, the parallel current source circuit including an alternate current path to apply the supplemental current to the voltage output node.

In Example 3, the subject matter of Examples 1-2 includes further subject matter where the voltage regulator circuit further to reduce the regulated current level in response to the supplemental current at the voltage output node.

In Example 4, the subject matter of Example 3 includes further subject matter where the voltage regulator circuit further to reduce the regulated current level to be substantially equal to a voltage regulator maximum efficiency current level.

In Example 5, the subject matter of Examples 1-4 includes further subject matter where wherein the current control circuit includes a digital control circuit, the digital control circuit to cause the variable current source to increase the supplemental current at the voltage output node such that a supplemental current increase is substantially equal to a regulated current decrease.

In Example 6, the subject matter of Example 5 includes further subject matter where the digital control circuit further to: receive the regulated current level from a current sensing circuit; and identify a regulated current reduction in the regulated current level; wherein the supplemental current at the voltage output node is increased based on the regulated current reduction.

In Example 7, the subject matter of Example 6 includes further subject matter where the digital control circuit further to determine the current level threshold based on at least one of a maximum voltage regulator reliability current, a voltage regulator inductor saturation level, and a voltage regulator circuit temperature.

In Example 8, the subject matter of Examples 6-7 includes further subject matter where the digital control circuit further to: receive the regulated voltage output and an input voltage level; and determine the current level threshold based on the regulated voltage output, the input voltage level, and voltage regulator resistance.

In Example 9, the subject matter of Example 8 includes further subject matter where the digital control circuit further to: determine a voltage difference based on a difference between the input voltage level and the regulated voltage output; determine a doubled regulator resistance based on the voltage regulator resistance; and determine the current level threshold based on the voltage difference divided by the doubled regulator resistance.

In Example 10, the subject matter of Examples 5-9 includes further subject matter where wherein the voltage regulator circuit includes a switched capacitor voltage regulator.

In Example 11, the subject matter of Example 10 includes further subject matter where wherein: the switched capacitor voltage regulator operates at a switched capacitor operating frequency; and the supplemental current at the voltage output node is increased based on the switched capacitor operating frequency.

In Example 12, the subject matter of Examples 1-11 includes further subject matter where the voltage regulator circuit including a control loop coupled to the voltage output node, a phase controller coupled to the control loop, an inverter circuit coupled to the phase controller, and an inductor coupled between the inverter circuit and the voltage output node.

In Example 13, the subject matter of Example 12 includes further subject matter where wherein the voltage regulator circuit includes a fully integrated voltage regulator (FIVR).

Example 14 is a method comprising: generating a regulated voltage output at a voltage output node coupled to a voltage regulator circuit, the regulated voltage output associated with a regulated current level; receiving the regulated current level at a supplemental current source circuit, the supplemental current source circuit including a variable current source coupled to the voltage output node and a current control circuit; determining, at the current control circuit, the regulated current level transgressed a current level threshold; generating a supplemental current at the variable current source; and applying the supplemental current to the voltage output node.

In Example 15, the subject matter of Example 14 includes further subject matter where wherein the supplemental current source circuit includes a parallel current source circuit, the parallel current source circuit including an alternate current path to apply the supplemental current to the voltage output node.

In Example 16, the subject matter of Examples 14-15 includes further subject matter where reducing the regulated current level in response to the supplemental current at the voltage output node.

In Example 17, the subject matter of Example 16 includes further subject matter where reducing the regulated current level to be substantially equal to a voltage regulator maximum efficiency current level.

In Example 18, the subject matter of Examples 14-17 includes further subject matter where the method further including: receiving the regulated current level from a current sensing circuit at a digital control circuit within the current control circuit; identifying a regulated current reduction in the regulated current level; and increasing the supplemental current at the voltage output node based on the regulated current reduction such that a supplemental current increase is substantially equal to a regulated current decrease.

In Example 19, the subject matter of Example 18 includes further subject matter where the method further including: receiving the regulated voltage output and an input voltage level at the digital control circuit; and determining, at the digital control circuit, the current level threshold based on the regulated voltage output, the input voltage level, and voltage regulator resistance.

In Example 20, the subject matter of Example 19 includes further subject matter where the method further including: determining, at the digital control circuit, a voltage difference based on a difference between the input voltage level and the regulated voltage output; determining, at the digital control circuit, a doubled regulator resistance based on the voltage regulator resistance; and determining, at the digital control circuit, the current level threshold based on the voltage difference divided by the doubled regulator resistance.

Example 21 is a system comprising: a voltage regulator circuit including a voltage regulator input node and a regulator current output node, the regulator current output node coupled to a voltage output node, the voltage regulator circuit to apply a regulated current level to the voltage output node; and a supplemental current source circuit including: a supplemental input node coupled to the voltage regulator input node; a current control input node coupled to the regulator current output node; and a current control output node coupled to the voltage output node, the supplemental current source circuit to generate a supplemental current at the voltage output node based on the regulated current level.

In Example 22, the subject matter of Example 21 includes further subject matter where the supplemental current source circuit including: a variable current source coupled to the voltage output node; and a current control circuit coupled to the variable current source and the voltage output node, the current control circuit to: receive the regulated current level; determine the regulated current level transgressed a current level threshold; and cause the variable current source to generate a supplemental current at the voltage output node.

In Example 23, the subject matter of Examples 21-22 includes further subject matter where wherein the supplemental current source circuit includes a parallel current source circuit, the parallel current source circuit including an alternate current path to apply the supplemental current to the voltage output node.

In Example 24, the subject matter of Examples 21-23 includes further subject matter where a voltage regulator inductor coupled between the current control input node and the regulator current output node.

In Example 25, the subject matter of Examples 22-24 includes further subject matter where the voltage regulator circuit further to reduce the regulated current level in response to the supplemental current at the voltage output node.

In Example 26, the subject matter of Example 25 includes further subject matter where the voltage regulator circuit further to reduce the regulated current level to be substantially equal to a voltage regulator maximum efficiency current level.

In Example 27, the subject matter of Examples 22-26 includes further subject matter where wherein the current control circuit includes a digital control circuit, the digital control circuit to cause the variable current source to increase the supplemental current at the voltage output node such that a supplemental current increase is substantially equal to a regulated current decrease.

In Example 28, the subject matter of Example 27 includes further subject matter where the digital control circuit further to: receive the regulated current level from a current sensing circuit; and identify a regulated current reduction in the regulated current level; wherein the supplemental current at the voltage output node is increased based on the regulated current reduction.

In Example 29, the subject matter of Example 28 includes further subject matter where the digital control circuit further to determine the current level threshold based on at least one of a maximum voltage regulator reliability current, a voltage regulator inductor saturation level, and a voltage regulator circuit temperature.

In Example 30, the subject matter of Examples 28-29 includes further subject matter where the voltage regulator circuit further to generate a regulated voltage output at a voltage output node, the digital control circuit further to: receive the regulated voltage output and an input voltage level; and determine the current level threshold based on the regulated voltage output, the input voltage level, and voltage regulator resistance.

In Example 31, the subject matter of Example 30 includes further subject matter where the digital control circuit further to: determine a voltage difference based on a difference between the input voltage level and the regulated voltage output; determine a doubled regulator resistance based on the voltage regulator resistance; and determine the current level threshold based on the voltage difference divided by the doubled regulator resistance.

In Example 32, the subject matter of Examples 27-31 includes further subject matter where wherein the voltage regulator circuit includes a switched capacitor voltage regulator.

In Example 33, the subject matter of Example 32 includes further subject matter where wherein: the switched capacitor voltage regulator operates at a switched capacitor operating frequency; and the supplemental current at the voltage output node is increased based on the switched capacitor operating frequency.

In Example 34, the subject matter of Examples 22-33 includes further subject matter where the voltage regulator circuit including a control loop coupled to the voltage output node, a phase controller coupled to the control loop, an inverter circuit coupled to the phase controller, and an inductor coupled between the inverter circuit and the voltage output node.

In Example 35, the subject matter of Example 34 includes further subject matter where wherein the voltage regulator circuit includes a fully integrated voltage regulator (FIVR).

Example 36 is at least one machine-readable medium including instructions that, when executed by processing circuitry, cause the processing circuitry to perform operations to implement of any of Examples 1-35.

Example 37 is an apparatus comprising means to implement of any of Examples 14-35.

Example 38 is a system to implement of any of Examples 1-35.

Example 39 is a method to implement of any of Examples 1-13.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or modules may, collectively or individually, be embodied as circuitry that forms part of a larger system, for example, an integrated circuit (IC), system on-chip (SoC), desktop computers, laptop computers, tablet computers, servers, smart phones, etc.

As used in any embodiment herein, the term "logic" may refer to firmware and/or circuitry configured to perform any of the aforementioned operations. Firmware may be embodied as code, instructions or instruction sets and/or data that are hard-coded (e.g., nonvolatile) in memory devices and/or circuitry.

"Circuitry," as used in any embodiment herein, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry executing code and/or instructions sets (e.g., software, firmware, etc.) corresponding to the functionality described herein, thus transforming a general-purpose processor into a specific-purpose processing environment to perform one or more of the operations described herein. In some embodiments, the processor circuitry may be embodied as a stand-alone integrated circuit or may be incorporated as one of several components on an integrated circuit. In some embodiments, the various components and circuitry of the node or other systems may be combined in a system-on-a-chip (SoC) architecture.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims, along with the full scope of equivalents to which such claims are entitled.

**Claims**

1. A method comprising:

   generating a regulated voltage output at a voltage output node coupled to a voltage regulator circuit, the regulated voltage output associated with a regulated current level;
   receiving the regulated current level at a supplemental current source circuit coupled to the voltage output node; and
   applying a supplemental current to the voltage output node based on the regulated current level.

2. The method of claim 1, further including:

   determining, at a current control circuit, the regulated current level has exceeded a current level threshold; and
   generating, responsive to the regulated current level exceeding the current level threshold, the supplemental current at the supplemental current source circuit.

3. The method of claim 2, wherein:

   the supplemental current source circuit includes a variable current source coupled to the voltage output node; and
   the supplemental current is generated by the variable current source.

4. The method of any of claims 2-3, wherein the supplemental current source circuit includes a parallel current source circuit.

5. The method of claim 4, wherein the parallel current source circuit includes an alternate current path to apply the supplemental current to the voltage output node.

6. The method of any of claims 1-5, further including reducing the regulated current level in response to the supplemental current at the voltage output node.

7. The method of claim 6, further including reducing the regulated current level to be substantially equal to a voltage regulator maximum efficiency current level.

8. The method of any of claims 2-7, the method further including:

   receiving the regulated current level from a current sensing circuit at a digital control circuit within the current control circuit; and
   identifying a regulated current reduction in the regulated current level.

9. The method of claim 8, the method further including increasing, responsive to identifying the regulated current reduction in the regulated current level, the supplemental current at the voltage output node based on the regulated current reduction such that a supplemental current increase is substantially equal to a regulated current decrease.

**10.** The method of any of claims 8-9, the method further including:

receiving the regulated voltage output and an input voltage level at the digital control circuit; and
determining, at the digital control circuit, the current level threshold based on the regulated voltage output, the input voltage level, and voltage regulator resistance.

**11.** The method of claim 10, the method further including:

determining, at the digital control circuit, a voltage regulator difference based on a difference between the input voltage level and the regulated voltage output;
determining, at the digital control circuit, a doubled regulator resistance based on the voltage regulator resistance; and
determining, at the digital control circuit, the current level threshold based on the voltage regulator difference and the doubled regulator resistance.

**12.** The method of claim 11, wherein determining the current level threshold is further based on the voltage regulator difference divided by the doubled regulator resistance.

**13.** An apparatus comprising means to perform a method as claimed in any preceding claim.

**14.** Machine-readable storage including machine-readable instructions, when executed, cause a computer to implement a method as claimed in any preceding claim.

**15.** A computer program comprising instructions which, when the computer program is executed by a computer, cause the computer to carry out the method as claimed in any preceding claim.

VOLTAGE REGULATOR LOOP WITH PARALLEL CURRENT SOURCE

100

PARALLEL CURRENT SOURCE — 140

155

$V_{IN}$, $V_{OUT}$, $I_{THRESHOLD}$ — 160

DIGITAL CONTROL — 145

125

$V_{CCIN}$

130

120

PHASE CONTROLLER

110

CONTROL LOOP

135

$V_{OUT}$

$R_L$

CURRENT SENSE

L — 165

150

C

FIG. 1

OPERATION OF VOLTAGE REGULATOR
WITHOUT PARALLEL CURRENT SOURCE

$I_{LOAD}$
210

220
$I_{OUT,VR}$

230
EFFICIENT CURRENT LEVEL
FOR VOLTAGE REGULATOR

**FIG. 2A**

OPERATION OF VOLTAGE REGULATOR
WITH PARALLEL CURRENT SOURCE

$I_{LOAD}$
215

245

225
$I_{OUT,VR}$

255 $I_{OUT,PCS}$

235
EFFICIENT CURRENT LEVEL
FOR VOLTAGE REGULATOR

**FIG. 2B**

200

EP 4 395 150 A1

EFFICIENCY FROM FRAMEWORK MODEL SIMULATION
WITH AND WITHOUT PARALLEL CURRENT SOURCE

FIG. 3A

FIG. 3B

EP 4 395 150 A1

ON-DIE POWER CONNECTIONS BETWEEN LOAD, IVR AND PCS

410 LOAD DOMAIN

420 LOAD DOMAIN ON-DIE POWER GRID

430 PARALLEL CURRENT SOURCE

440 VIN POWER CONNECTION

450 VOLTAGE REGULATOR

**FIG. 4**

500

510 — GENERATE REGULATED VOLTAGE OUTPUT

515 — RECEIVE REGULATED CURRENT LEVEL

520 — DETERMINE THAT THE REGULATED CURRENT LEVEL TRANSGRESSED A CURRENT LEVEL THRESHOLD

525 — GENERATE AND APPLY PARALLEL CURRENT TO VOLTAGE OUTPUT NODE

530 — REDUCE REGULATED CURRENT LEVEL

535 — REDUCE CURRENT TO MAXIMUM EFFICIENCY CURRENT LEVEL

540 — RECEIVE REGULATED CURRENT LEVEL

545 — IDENTIFY REGULATED CURRENT REDUCTION

550 — INCREASE PARALLEL CURRENT

555 — DETERMINE CURRENT LEVEL THRESHOLD

**FIG. 5**

FIG. 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/222554 A1 (JATAVALLABHULA SRIKANTH [IN] ET AL) 3 August 2017 (2017-08-03) * paragraphs [0025], [0027], [0028], [0034], [0039], [0040], [0042]; claims 5, 6; figures 4,7 * | 1-15 | INV. H02M3/156 H02M3/158 H02M1/00 H02M1/32 |
| X | US 2018/198274 A1 (LI SHENGYUAN [US] ET AL) 12 July 2018 (2018-07-12) | 1,13-15 | |
| A | * paragraphs [0020], [0024]; figures 1,2, * | 2-12 | |
| X | MARTÍNEZ-GARCÍA H ET AL: "Linear-assisted DC/DC regulator-based current source for LED drivers", ELECTRONICS LETTERS, THE INSTITUTION OF ENGINEERING AND TECHNOLOGY, GB, vol. 52, no. 6, 17 March 2016 (2016-03-17) , pages 437-439, XP006073860, ISSN: 0013-5194, DOI: 10.1049/EL.2015.3437 | 1,13-15 | |
| A | * Section Concept and description; equation 1; figures 1-3 * | 2-12 | TECHNICAL FIELDS SEARCHED (IPC) |
| A | US 2014/140146 A1 (MOZAK CHRISTOPHER P [US] ET AL) 22 May 2014 (2014-05-22) * paragraph [0018]; figure 1 * | 1-15 | H02M |
| A | US 2019/280590 A1 (LEE DAMON [US] ET AL) 12 September 2019 (2019-09-12) * paragraph [0045]; figure 3A * | 1-15 | |
| A | KR 2014 0137924 A (JUNG DUCK YOUNG [KR]) 3 December 2014 (2014-12-03) * paragraphs [0023], [0042]; figure 1 * | 1-15 | |
| A | US 2013/162233 A1 (MARTY NICOLAS [FR]) 27 June 2013 (2013-06-27) * paragraphs [0029] – [0031], [0044]; figure 1 * | 1-15 | |

The present search report has been drawn up for all claims

| Place of search | Date of completion of the search | Examiner |
|---|---|---|
| The Hague | 23 February 2024 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 0984

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2024

| Patent document cited in search report | | Publication date | Patent family member(s) | | Publication date |
|---|---|---|---|---|---|
| US 2017222554 | A1 | 03-08-2017 | CN | 108684211 A | 19-10-2018 |
| | | | EP | 3411945 A1 | 12-12-2018 |
| | | | US | 2017222554 A1 | 03-08-2017 |
| | | | WO | 2017136040 A1 | 10-08-2017 |
| US 2018198274 | A1 | 12-07-2018 | NONE | | |
| US 2014140146 | A1 | 22-05-2014 | EP | 2920664 A1 | 23-09-2015 |
| | | | KR | 20150079601 A | 08-07-2015 |
| | | | US | 2014140146 A1 | 22-05-2014 |
| | | | WO | 2014077902 A1 | 22-05-2014 |
| US 2019280590 | A1 | 12-09-2019 | NONE | | |
| KR 20140137924 | A | 03-12-2014 | NONE | | |
| US 2013162233 | A1 | 27-06-2013 | EP | 2798729 A1 | 05-11-2014 |
| | | | EP | 4060886 A1 | 21-09-2022 |
| | | | US | 2013162233 A1 | 27-06-2013 |
| | | | WO | 2013098246 A1 | 04-07-2013 |

EPO FORM P0459

For more details about this annex : see Official Journal of the European Patent Office, No. 12/82